# EUROPÄISCHE PATENTSCHRIFT

(11) **EP 2 514 024 B1**
(45) Veröffentlichungstag und Bekanntmachung des Hinweises auf die Patenterteilung: **09.04.2014**
(21) Anmeldenummer: 10787433.1
(22) Anmeldetag: 03.12.2010
(51) Int. Cl.: H01M 10/04, H01M 10/613, H01M 10/625, H01M 10/6554

(54) **KÜHLVORRICHTUNG FÜR EIN BATTERIEMODUL**
COOLING DEVICE FOR A BATTERY MODULE
DISPOSITIF DE REFROIDISSEMENT POUR UN MODULE D'ACCUMULATEURS

(30) Priorität: 14.12.2009 DE 102009058070
(43) Veröffentlichungstag der Anmeldung: 24.10.2012
(73) Patentinhaber: Behr GmbH & Co. KG, 70469 Stuttgart (DE)
(72) Erfinder: HIRSCH, Stefan, 70180 Stuttgart (DE)
(74) Vertreter: Grauel, Andreas
(86) Internationale Anmeldenummer: PCT/EP2010/068861
(87) Internationale Veröffentlichungsnummer: WO 2011/073042

(56) Entgegenhaltungen:
- WO-A1-2008/050719
- DE-A1-102007 063 179
- DE-A1-102008 010 839

## Beschreibung

Die vorliegende Erfindung bezieht sich auf eine Kühlvorrichtung für ein Batteriemodul sowie auf eine Batterievorrichtung.

In modernen Hybrid-Elektro- und Elektro-Fahrzeugen (HEV/EV) werden leistungsfähige Energiespeicher, wie zum Beispiel Li-lonen oder NiMH-Akkumulatoren oder Super-Caps eingesetzt. Bei diesen kommt es beim schnellen Laden und Entladen aufgrund von Widerständen in und außerhalb der Zellen zur Erwärmung. Temperaturen über 50°C schädigen die Energiespeicher dauerhaft. Um die Funktion der Energiespeicher zu gewährleisten müssen diese aktiv gekühlt werden. Dazu werden die Energiespeicher mit einem speziellen Kühler in thermischen Kontakt gebracht. D.h. alle Zellen sollten auf demselben Temperaturniveau liegen. Das Temperaturniveau der Zellen beeinffusst deren Lebensdauer und die Leistung und damit maßgeblich die Lebensdauer der gesamten Batterie.

Für einen optimalen Betrieb der Kühlfunktion ist es wichtig, dass der Kühler einen möglichst gleichmäßigen thermischen Kontakt an jede Zelle bzw. jedes Batteriemodul hat. Unter anderem ist dazu eine gleichmäßige Anpresskraft erforderlich. Diese Anpresskräfte müssen auch nach Jahren unter verschiedenen Vibrationen, Lastwechseln, Material-Ermüdung, Temperatureinflüssen, Setzungserscheinungen usw. noch in ausreichender Höhe vorhanden sein. Konstruktiv werden zu diesem Zweck häufig Federn eingesetzt.

Federn werden dabei so eingesetzt, dass einzelne oder mehrere Kühlbleche oder Batteriezellen mittels einer Feder auf eine Kühlplatte gespannt bzw. angepresst werden kann. Die DE 10 2008 010 839 A1 beschreibt beispielsweise ein vertikales Verspannen eines Batteriestacks.

Es ist die Aufgabe der vorliegenden Erfindung eine verbesserte Kühlvorrichtung für ein Batteriemodul sowie eine verbesserte Batterievorrichtung zu schaffen.

Diese Aufgabe wird durch eine Kühlvorrichtung gemäß Anspruch 1 sowie eine Batterievorrichtung gemäß Anspruch 9 gelöst.

Der vorliegenden Erfindung liegt die Erkenntnis zugrunde, dass Federn eingesetzt werden können, deren Federkraft erst durch die Montage der Zellen bzw. Module selbst aktiviert wird, um eine dauerhafte Anpresskraft eines Kühlers an Batteriezellen bzw. Batteriemodule sicherzustellen. Erfindungsgemäß wird daher eine schaltende Federung zur Batteriekühlung eingesetzt.

Vorteilhafterweise kann der erfindungsgemäße Ansatz insbesondere dann genutzt werden, wenn der Batteriekühler, beispielsweise aus Bauraumgründen, schwer zugänglich ist. Dies kann beispielsweise der Fall sein, wenn der Batteriekühler im Boden eines Batteriegehäuses bzw. hinter den Batteriezellen oder Batteriemodulen angeordnet wird. In einem solchen Fall kann bei der Montage das Problem bestehen, dass die Anpresskraft durch die Montage der Zellen bzw. Module auf den Kühler erfolgen muss, da die Federn nach der Montage nicht mehr zugänglich sind. Die Montage des ersten Moduls bewirkt eine Lageänderung des Kühlers und damit das Spannen der Feder oder der Federn. Da aber nicht alle Zellen bzw. Module gleichzeitig montiert werden können, ergibt sich bei der Montage das Problem, dass der Kühler durch die Federkräfte in dem Bereich belastet wird in dem die Zellen bzw. Module noch nicht montiert sind. Die komplette Anpresskraft der Federn wirkt hier auf den Kühler selbst und kann diesen beschädigen.

Durch den erfindungsgemäßen Ansatz einer schaltenden Feder kann das Montageproblem gelöst werden.

Dies geschieht dadurch, dass die Feder samt Kühler und Federaufnahme erfindungsgemäß so gestaltet wird, dass nicht die Lageänderung des Kühlers die Federkraft aktiviert sondern durch die Montage der Zelle bzw. des Batteriemoduls die Feder gespannt wird und damit die Federkraft aufgebaut wird. In dem Bereich, in dem noch keine Batteriezelle bzw. kein Batteriemodul montiert ist, ist dadurch die Feder lose und übt (noch) keine Anpresskraft auf den Kühler aus.

Dabei können die Federn beispielsweise als Blattfedern, Tellerfedern oder Drahtfedern usw. ausgeführt sein. Die schaltende Funktion kann durch die Feder selbst, also einteilig, ausgeführt sein. Alternativ kann die schaltende Funktion durch die Feder und zusätzliche Hilfsbauteile, z.B. Hebel oder Gelenke, ausgeführt werden. Auch können die schaltenden Federn, anstelle von Einzelteilen, aus mehreren in einem Bauteil zusammengefassten Federn bestehen und beispielsweise als endlos hergestellte Blattfeder realisiert sein.

Die vorliegende Erfindung schafft eine Kühlvorrichtung für ein Batteriemodul, mit folgenden Merkmalen: einem Kühlelement, das sich von einer dem Batteriemodul zugewandten ersten Seite des Kühlelements zu einer gegenüberliegenden zweiten Seite des Kühlelements erstreckt; und mindestens einem Federelement, das auf der zweiten Seite des Kühlelements angeordnet ist, um in einem angespannten Zustand eine Anpresskraft auf die zweite Seite des Kühlelements auszuüben; und mindestens einer Spanneinrichtung, die mit dem Federelement gekoppelt ist und wobei sich ein Kontaktbereich der Spanneinrichtung über die erste Seite des Kühlelements hinaus erstreckt, wenn sich das Federelement in einem entspannten Zustand befindet.

Bei dem Batteriemodul kann es sich um einen Energiespeicher, wie zum Beispiel einem Li-lonen oder einem NiMH-Akkumulator oder einen Super-Cap, handeln. Das Batteriemodul kann eine Batteriezelle oder eine Mehrzahl von Batteriezellen umfassen. Das Kühlelement kann eine Kühlplatte darstellen, die zur Kühlung des Batteriemoduls an einer Oberfläche des Batteriemoduls anliegen kann. Das Kühlelement kann aus einem gut wärmeleitenden Material, beispielsweise Metall sein. Das Federelement kann als Feder ausgebildet sein, deren Federkraft im gespannten Zustand so auf das Kühlelement wirkt, dass das Kühlelement gegen das Batteriemodul gedrückt wird. Bei dem Spannelement kann es sich um einen starren Hebel handeln, dessen eines Ende mit dem Federelement gekoppelt ist und das Federelement spannen kann und dessen anderes Ende durch das Batteriemodul bewegt werden kann, wenn sich das Batteriemodul dem Kühlelement nähert. Wenn das Batteriemodul an dem Kühlelement anliegt, kann das Spannelement durch das Batteriemodul in das Durchgangsloch hineingedrückt sein. In diesem Zustand kann die Federkraft des Federelements maximal sein.

Demnach kann die Spanneinrichtung ausgebildet sein, um eine Federspannung des Federelements zu erhöhen, wenn der Kontaktbereich der Spanneinrichtung in Richtung der zweiten Seite bewegt wird. Der Kontaktbereich der Spanneinrichtung kann dabei durch das Batteriemodul bewegt werden, das bei der Montage auf das Kühlelement aufgesetzt werden kann.

Dazu kann der Kontaktbereich ausgebildet sein, um an das Batteriemodul anzustoßen und von dem Batteriemodul zu der zweiten Seite hin gedrückt zu werden, wenn das Batteriemodul der ersten Seite des Kühlelementes angenähert wird. Der Kontaktbereich kann abgerundet sein, um beim Annähern des Batteriemoduls an dessen Oberfläche entlang zu gleiten und ein verhaken zu verhindern.

Gemäß einer Ausführungsform kann die Spanneinrichtung aus einem Endbereich des Federelements ausgeformt sein. Spanneinrichtung und Federelement können somit aus einem Teil geformt sein.

Alternativ kann die Spanneinrichtung über ein Gelenk mit dem Federelement verbunden sein. Dadurch kann beispielsweise das Spannverhalten verbessert werden.

Das Federelement kann als Blattfeder, Tellerfeder oder Drahtfeder ausgeführt sein. Die Federart kann abhängig von der erforderlichen Anpresskraft und dem verfügbaren Bauraum ausgewählt werden. Es können auch unterschiedliche Federarten kombiniert werden.

Das Federelement kann zumindest einen ersten Kontaktbereich zu der zweiten Seite des Kühlelements und zumindest einen zweiten Kontaktbereich zu einem Batteriegehäuse aufweisen, in dem das Kühlelement angeordnet werden kann. Somit kann das Federelement zwischen dem Batteriegehäuse und dem Kühlelement angeordnet sein. Demnach kann eine der Anpresskraft entgegen gesetzte Kraft auf das Batteriegehäuse ausgeübt werden.

Das Kühlelement kann ein Durchgangsloch, insbesondere eine Mehrzahl von Durchgangslöchern aufweisen. In diesem Fall kann sich die Spanneinrichtung durch zumindest ein Durchgangsloch erstrecken oder die Kühlvorrichtung eine der Mehrzahl von Durchgangslöchern entsprechende Anzahl von Spanneinrichtungen aufweisen. Die Durchgangslöcher können verteilt über das Kühlelement angeordnet sein. Insbesondere können die Durchgangslöcher in einem Bereich des Kühleelementes angeordnet sein, in dem das Kühlelement an das oder die Batteriemodule angrenzt.

In diesem Fall kann die Kühlvorrichtung eine der Mehrzahl von Durchgangslöchern entsprechende Anzahl von Federelementen aufweisen. Somit kann jedem Durchgangsloch eine Spanneinrichtung und jeder Spanneinrichtung ein Federelement zugeordnet sein.

Alternativ kann sich das mindestens eine Federelement über einen Bereich des Kühlelementes erstrecken, der mehrere oder alle der Mehrzahl von Durchgangslöchern umfasst. Beispielsweise kann ein einziges Federelement vorgesehen sein, das sich über den mit Durchgangslöchern versehenen Bereich des Kühlelements erstreckt.

Das Kühlelement kann als eine Kühlplatte ausgebildet sein, die aufgrund der Anpresskraft gegen ein oder eine Mehrzahl von Batteriemodulen gepresst wird. Dabei kann es sich um eine herkömmliche Kühlplatte handeln, die bereits zur Wärmeabfuhr von Energiespeichern eingesetzt wird.

Die vorliegende Erfindung schafft ferner eine Batterievorrichtung, mit folgenden Merkmalen: einem Batteriegehäuse; und einer Kühlvorrichtung gemäß einem der vorangegangenen Ansprüche, die so in dem Batteriegehäuse angeordnet ist, das das mindestens eine Federelement zwischen einer Innenwand des Batteriegehäuses und dem Kühlelement angeordnet ist. Das Batteriegehäuse kann ein Bodenelement und Wandelemente aufweisen. Die Kühlvorrichtung kann auf dem Bodenelement angeordnet sein.

Die Batterievorrichtung kann mindestens ein Batteriemodul aufweisen, das angrenzend an die erste Seite des Kühlelements in dem Batteriegehäuse angeordnet ist. Somit kann das Batteriemodul auf die Kühlvorrichtung aufgesetzt werden und beim Annähern an die Kühlvorrichtung die Spannelemente betätigen und somit die Federelemente zu spannen.

Vorteilhafte Ausführungsbeispiele der vorliegenden Erfindung werden nachfolgend Bezug nehmend auf die beiliegenden Zeichnungen näher erläutert. Es zeigen:
- Fig. 1: eine Darstellung einer Batterievorrichtung;
- Fig. 2: eine Schnittdarstellung der Batterievorrichtung;
- Fig. 3: eine Detaildarstellung der Batterievorrichtung;
- Fig. 4: eine weitere Darstellung einer Batterievorrichtung;
- Fig. 5: eine Schnittdarstellung der Batterievorrichtung;
- Fig. 6: eine weitere Darstellung einer Batterievorrichtung;
- Fig. 7: eine Schnittdarstellung der Batterievorrichtung;
- Fig. 8: eine Darstellung einer erfindungsgemäßen Batterievorrichtung;
- Fig. 9: eine Schnittdarstellung der erfindungsgemäßen Batterievorrichtung;
- Fig. 10: eine Detaildarstellung der erfindungsgemäßen Batterievorrichtung;
- Fig. 11: eine weitere Detaildarstellung der erfindungsgemäßen Batterievorrichtung;
- Fig. 12: eine Darstellung einer erfindungsgemäßen Batterievorrichtung;
- Fig. 13: eine Schnittdarstellung der erfindungsgemäßen Batterievorrichtung;
- Fig. 14: eine Schnittdarstellung der erfindungsgemäßen Batterievorrichtung;
- Fig. 15: eine Detaildarstellung der erfindungsgemäßen Batterievorrichtung;
- Fig. 16: eine Schnittdarstellung der erfindungsgemäßen Batterievorrichtung;
- Fig. 17: eine Darstellung einer erfindungsgemäßen Batterievorrichtung, und
- Fig. 18: eine Schnittdarstellung einer erfindungsgemäßen Batterievorrichtung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

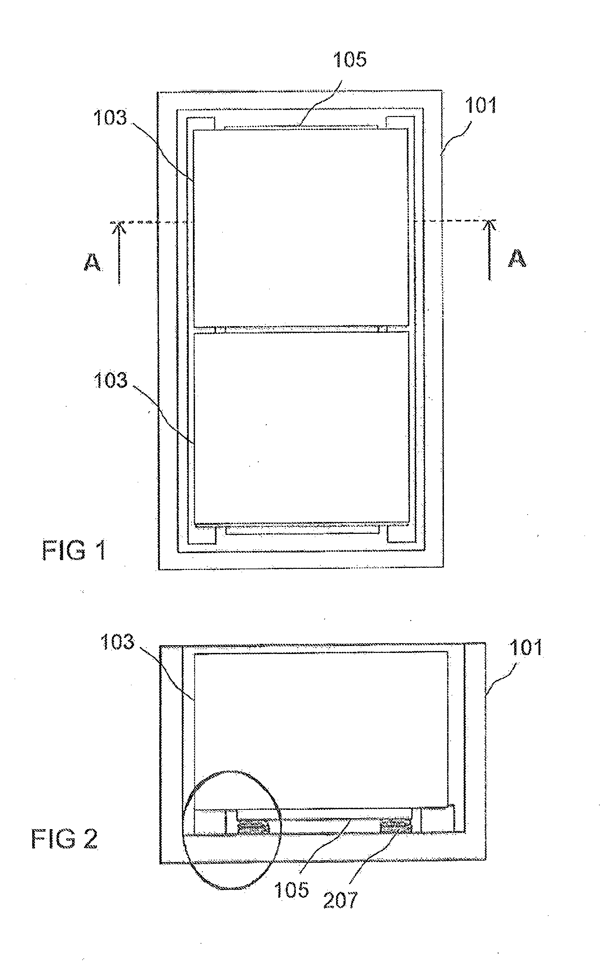

Fig. 1 zeigt eine Draufsicht auf eine Batterievorrichtung. Die Batterievorrichtung weist ein Batteriegehäuse 101 und zwei Batteriemodule 103 auf, die nebeneinander in dem Gehäuse 101 angeordnet sind. Unter den Batteriemodulen 103 erstreckt sich innerhalb des Batteriegehäuses 101 ein Kühlelement 105. Ferner ist eine Schnittlinie A - A gezeigt.

Fig. 2 zeigt eine Schnittdarstellung durch die in Fig. 1 gezeigte Batterievorrichtung entlang der Schnittlinie A - A. Gezeigt ist das Batteriegehäuse 101 mit einem Bodenelement und zwei Seitenelementen sowie das Batteriemodul 103, das in dem Gehäuse 101 auf Anschlägen angeordnet ist. An eine Unterseite des Batteriemoduls 103 liegt das Kühlelement 105 an. Das Kühlelement 105 wird mittels Federn 207 gegen das Batteriemodul 103 gedrückt. Somit drückt eine Feder 207 den Kühler 105 an das Batteriemodul 103 an.

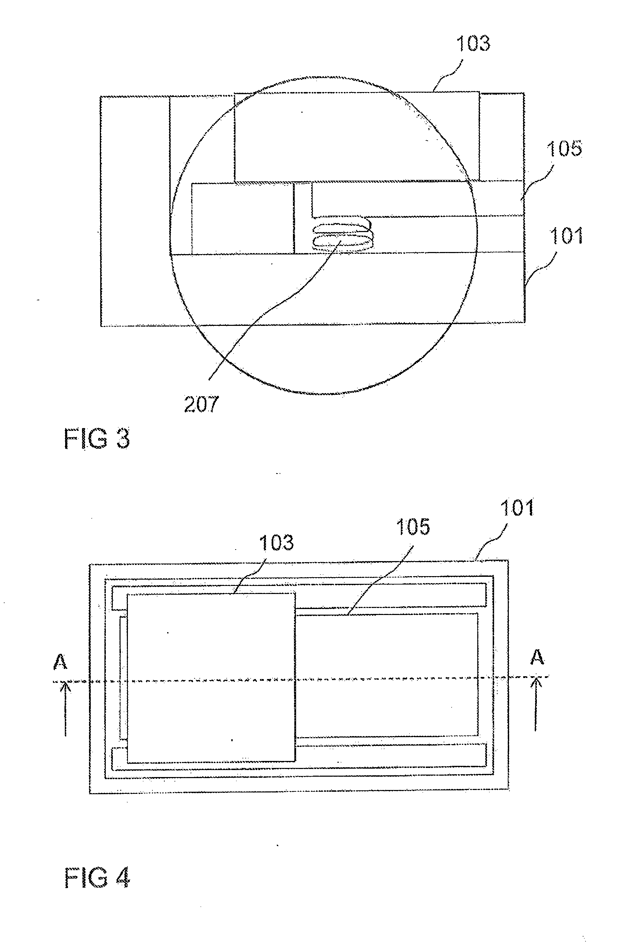

Die Figuren 4 bis 7 zeigen eine Montage der Batteriemodule 103.

Fig. 4 zeigt eine Draufsicht auf die Batterievorrichtung. Die Batterievorrichtung weist das Batteriegehäuse 101 und in diesem Fall ein Batteriemodul 103 auf das in dem Gehäuse 101 angeordnet wird. In dem Batteriegehäuse 101 ist das Kühlelement 105 angeordnet. Ferner ist eine Schnittlinie A - A gezeigt.

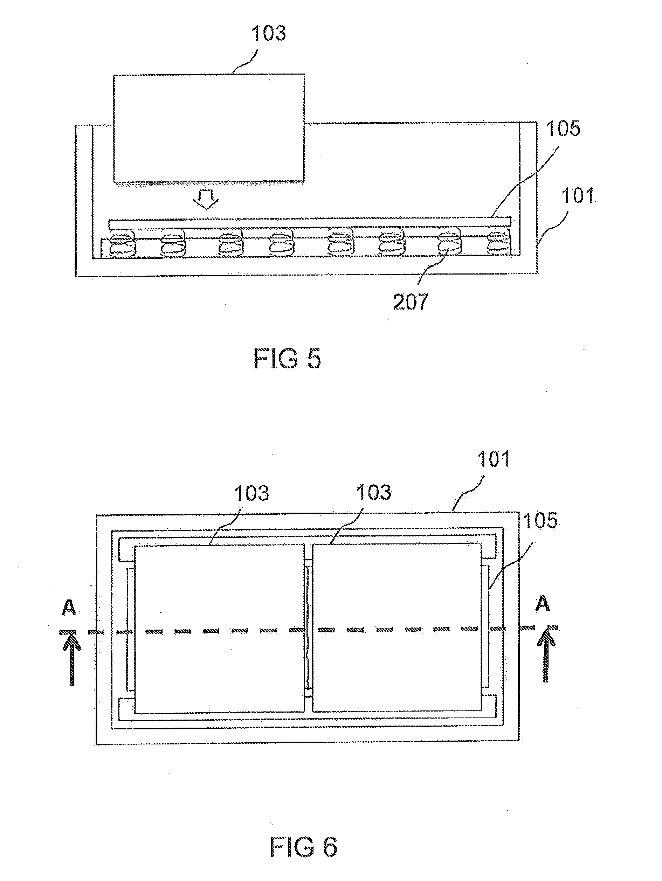

Fig. 5 zeigt eine Schnittdarstellung durch die in Fig. 4 gezeigte Batterievorrichtung entlang der Schnittlinie A - A. Gezeigt ist das Batteriegehäuse 101 mit dem Kühlelement 105, das mittels einer Mehrzahl von Federn 207 gehalten wird. Das Batteriemodul 103 wird in der durch einen Pfeil gekennzeichneten Richtung in das Batteriegehäuse 101 eingeführt und auf das Kühlelement 105 aufgesetzt.

Bei der Montage ist in einem ersten Schritt nur der Kühler 105 im Batteriegehäuse 101 angeordnet. Es ist noch kein Batteriemodul 103 montiert. Die Federn 207 die den Kühler 105 an die Module 103 anpressen sollen sind entspannt, der Federweg ist maximal. Dadurch steht der Kühler 105 über die vorgesehene Endposition hinaus.

Fig. 6 zeigt eine Draufsicht auf die in Fig. 4 gezeigte Batterievorrichtung. Die Batterievorrichtung weist neben dem bereits montierten ersten Batteriemodul 103 ein zweites zu montierendes Batteriemodul 103 auf. Wieder ist die Schnittlinie A - A gezeigt.

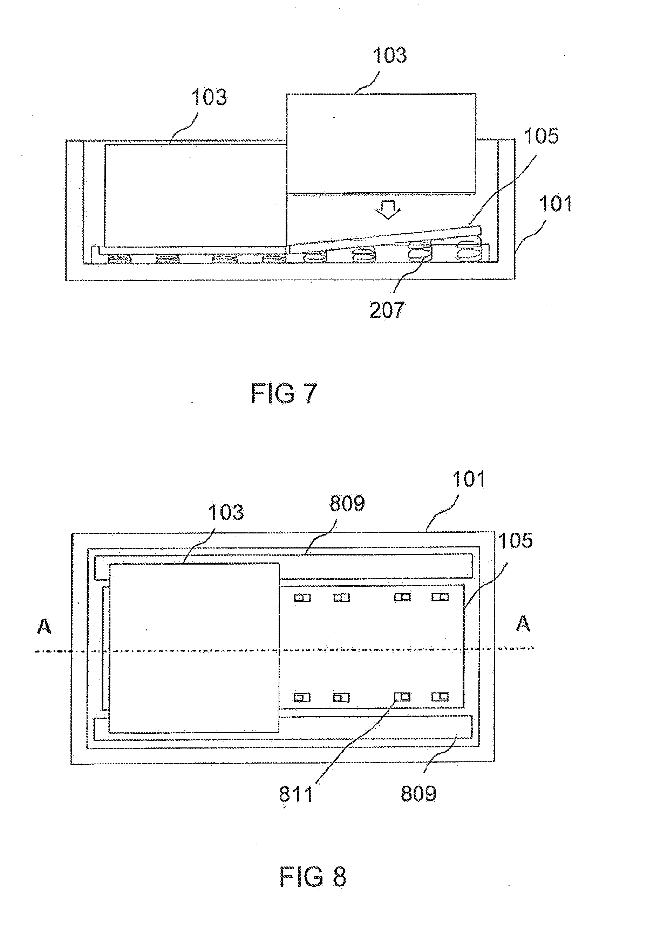

Fig. 7 zeigt eine Schnittdarstellung durch die in Fig. 6 gezeigte Batterievorrichtung entlang der Schnittlinie A - A. Gezeigt ist das Batteriegehäuse 101 mit dem Kühlelement 105, auf dem bereits ein Batteriemodul 103 montiert ist. Ein zweites Batteriemodul 103 wird in der durch einen Pfeil gekennzeichneten Richtung in das Batteriegehäuse 101 eingeführt und auf das Kühlelement 105 aufgesetzt.

In einem zweiten Schritt der Montage presst das Batteriemodul 103, das zuerst montiert wird, den Kühler 105 mit den Federn 207 in die vorgesehene Montageposition. Die Endlage des Batteriemoduls 103 ist durch das Gehäuse, z.B. durch geometrische Anschläge und Verschraubungen vorgegeben. Die Federn 207 pressen den Kühler 105 an das Batteriemodul 103 an, um dauerhaft den thermischen Kontakt sicherzustellen.

Der Kühler 105 wird durch die Federkräfte in dem Bereich belastet, in dem die Zellen bzw. Module 103 noch nicht montiert sind. Die komplette Anpresskraft der Federn 207 wirkt hier auf den Kühler 105 selbst und kann diesen beschädigen.

Die Figuren 8 bis 13 zeigen eine erfindungsgemäße Lösung unter Einsatz einer schaltenden Federung.

Fig. 8 zeigt eine Draufsicht auf eine Batterievorrichtung, gemäß einem Ausführungsbeispiel der vorliegenden Erfindung. Die Batterievorrichtung weist ein Batteriegehäuse 101 und ein Batteriemodul 103 auf, das in dem Gehäuse 101 angeordnet ist. Unter dem Batteriemodul 103 erstreckt sich innerhalb des Batteriegehäuses 101 ein Kühlelement 105. Das Batteriegehäuse 101 ist rechteckförmig. Am Boden des Batteriegehäuses 101, sind entlang der Längsseiten im Inneren zwei Anschläge 809 angeordnet, auf denen Randbereiche des Batteriemoduls 103 aufsetzen können. Somit wird das Batteriemodul 103 durch die Anschläge 809 gestützt. Das Kühlelement 105 ist zwischen den Anschlägen 809 angeordnet. Zu sehen ist eine dem Batteriemodul 103 zugewandte Oberfläche des Kühlelements. Das Kühlelement 105 kann als Kühlplatte ausgebildet sein. Das Kühlelement weist eine Mehrzahl von Löchern 811 auf. Gemäß diesem Ausführungsbeispiel sind die Löcher 811 in zwei Reihen entlang den Längsseiten des Kühlelements 105 angeordnet. Die Löcher 811 sind rechteckförmig. Durch jedes der Löcher 811 erstreckt sich eine Spanneinrichtung. Ferner ist eine Schnittlinie A - A gezeigt.

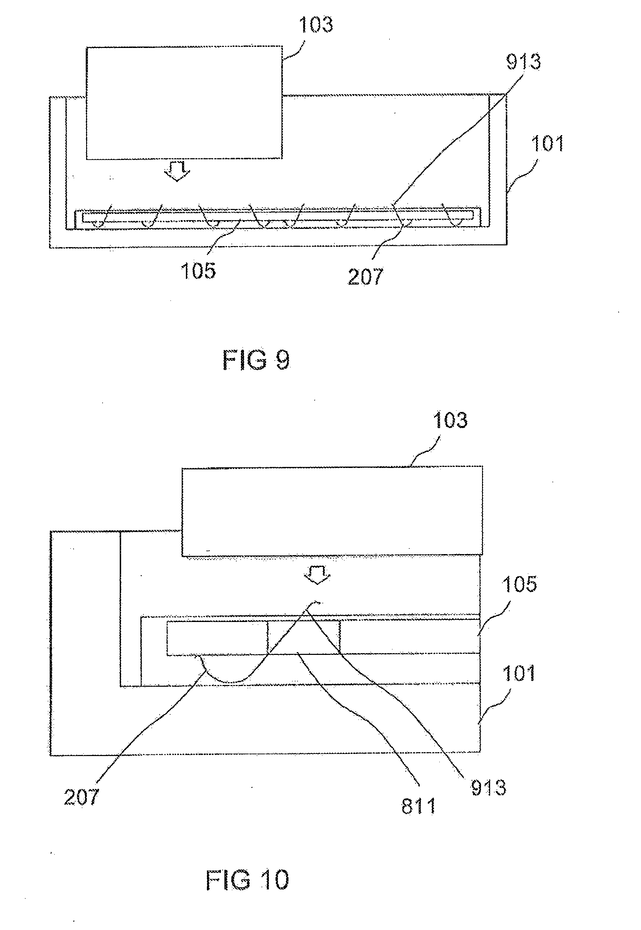

Fig. 9 zeigt eine Schnittdarstellung durch die in Fig. 8 gezeigte Batterievorrichtung entlang der Schnittlinie A - A. Gezeigt ist das Batteriegehäuse 101 mit dem Kühlelement 105, das mittels einer Mehrzahl von Federelementen 207 gehalten wird. Die Federelemente 207 sind zwischen dem Boden des Batteriegehäuses 101 und dem Kühlelement 105 angeordnet. Mittels der Federelemente 207 kann das Kühlelement von dem Boden des Batteriegehäuses 101 weg in Richtung des Batteriemoduls 103 gedrückt werden, das in der durch einen Pfeil gekennzeichneten Richtung in das Batteriegehäuse 101 eingeführt und im eingeführten Zustand auf das Kühlelement 105 aufsetzen wird. Die Federelemente 207 weisen jeweils ein Spannelement 913 auf, das jeweils durch eines der Löcher des Kühlelements durchgeführt ist. Die Spannelement 913 stehen jeweils über eine dem Batteriemodul 103 zugewandte Oberfläche des Kühlelementes 105 hinaus. Bevor das Batteriemodul 103 auf dem Kühlelement 105 aufsetzt, wird es auf die vorstehenden Endbereiche der Spannelemente 913 aufsetzten und diese bei einer weiteren Annäherung an das Kühlelement 105 in die Löcher der Kühlplatte 105 drücken. Die dadurch bewirkte Lageänderung der Spannelemente 913 bewirkt ein Spannen der Federn 207. Durch das Spannen der Federn 207 erhöht sich deren Federkraft wodurch das Kühlelement 105 mit einer vorbestimmten Kraft gegen das Batteriemodul 103 gedrückt und gehalten wird. Gemäß diesem Ausführungsbeispiel sind einander zugeordnete Federelemente 207 und Spannelemente 913 jeweils aus einem Stück gefertigt. Beispielsweise kann dazu ein Federstahlband oder Federstahldraht an einem Ende halbkreisförmig gebogen sein und am anderen Ende ein gerades Stück aufweisen, das schräg von dem gebogenen Stück absteht. Das Federelement 207 kann durch das gebogene Stück und das Spannelement 913 durch das gerade Stück ausgebildet werden.

In dem gezeigten ersten Montageschritt ist nur der Kühler 105 im Batteriegehäuse 101. Es ist noch kein Batteriemodul 103 montiert. Im unmontierten Zustand sind die Federn 207 entspannt, der Federweg maximal.

Der Kühler 105 liegt knapp unterhalb seiner vorgesehenen Einbaulage. Ein Anteil 913 jeder Feder 207 steht an der Seite, an der die Batteriemodule 103 montiert werden sollen, etwas über den Kühler 105 (und die Einbaulage) hinaus.

Fig. 10 zeigt eine Detaildarstellung eines Ausschnitts der in Fig. 9 gezeigten Batterievorrichtung. Gezeigt ist eine Feder 207 mit einem Spannelement 913, das durch eine Aussparung oder einen Durchbruch 913 des Kühlers 105 geführt ist.

Im unmontierten Zustand ist die Feder 207 entspannt. Der Kühler 105 liegt knapp unterhalb seiner vorgesehenen Einbaulage. Ein Anteil der Feder 207 steht an der Seite, an der die Batteriemodule 103 montiert werden sollen, etwas über den Kühler 105 hinaus.

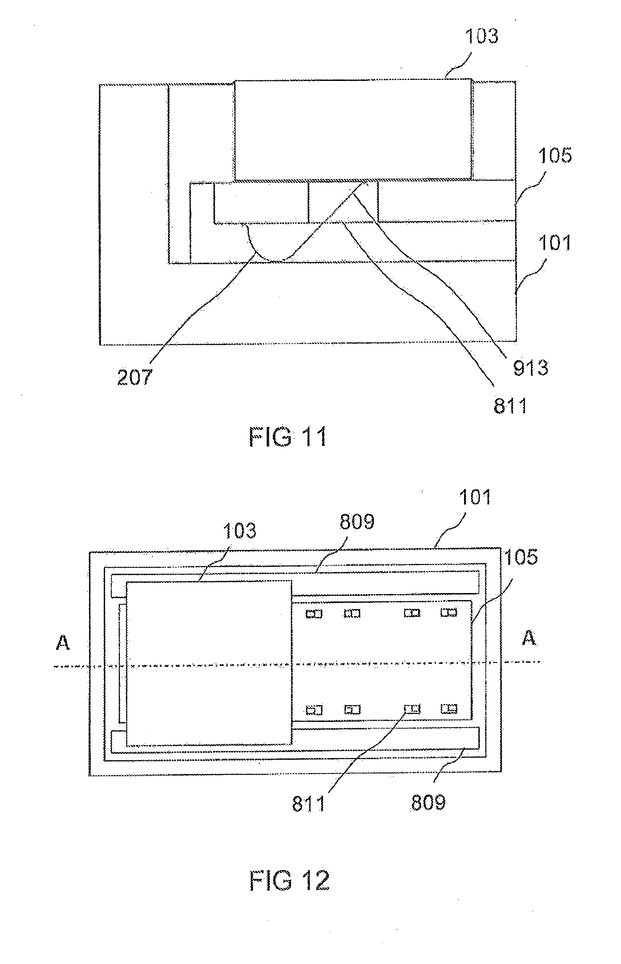

Fig. 11 zeigt die in Fig. 10 gezeigte Detaildarstellung, wobei das Batteriemodul 103 nun auf dem Kühler 105 aufliegt. Das Spannelement 913 wird durch das Batteriemodul 103 in die Aussparung 811 gedrückt und dort gehalten. Dadurch wird die Feder 207 gespannt und drückt mit einem, dem Spannelement 913 gegenüberliegende Ende, gegen eine Unterseite des Kühlers 105.

In dem gezeigten zweiten Schritt wird durch das Montieren des Batteriemoduls der herausstehende Anteil der Feder 207 niedergedrückt, wodurch die Feder 207 gespannt wird und den Kühler 105 in diesem Bereich an das Modul 103 anpresst.

Fig. 12 zeigt eine Draufsicht auf eine Batterievorrichtung, gemäß Ausführungsbeispiel der vorliegenden Erfindung. Die Batterievorrichtung entspricht der in Fig. 8 gezeigten Vorrichtung. Wiederum ist die Schnittlinie A - A gezeigt.

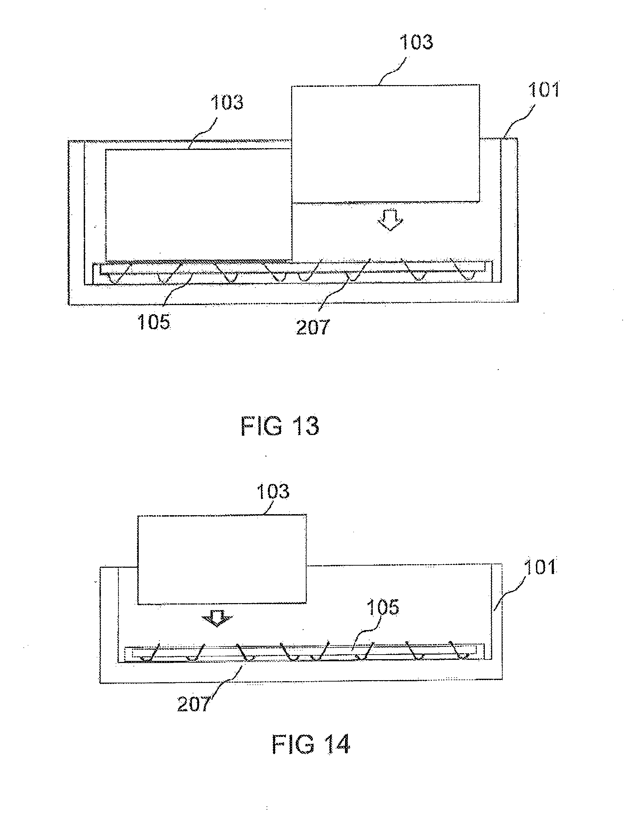

Fig. 13 zeigt eine Schnittdarstellung durch die in Fig. 12 gezeigte Batterievorrichtung entlang der Schnittlinie A - A. Gezeigt ist das Batteriegehäuse 101 mit einem ersten Batteriemodul 103, das bereits auf dem Kühlelement 105 aufliegt. Ein zweites Batteriemodul 103 wird neben dem ersten Batteriemodul 103 in der durch einen Pfeil gekennzeichneten Richtung in das Batteriegehäuse 101 eingeführt.

In dem gezeigten zweiten Montageschritt spannt das Batteriemodul 103, das zuerst montiert wird, die Federn 207 in seinem Montagebereich selbst. Die Federn 207 im übrigen Kühler 105 sind noch entspannt.

Die Endlage des Batteriemoduls 103 ist durch das Gehäuse 101, z.B. durch geometrische Anschläge und Verschraubungen vorgegeben. Die Federn 207 pressen den Kühler 105 an das Batteriemodul 103 an, um dauerhaft den thermischen Kontakt sicherzustellen.

Dadurch ergibt sich der Vorteil, dass der Kühler 105 nicht durch die Federkräfte in dem Bereich belastet, in dem die Zellen bzw. Module 103 noch nicht montiert sind.

Die beschriebenen Ausführungsbeispiele sind nur beispielhaft gewählt und können miteinander kombiniert werden.

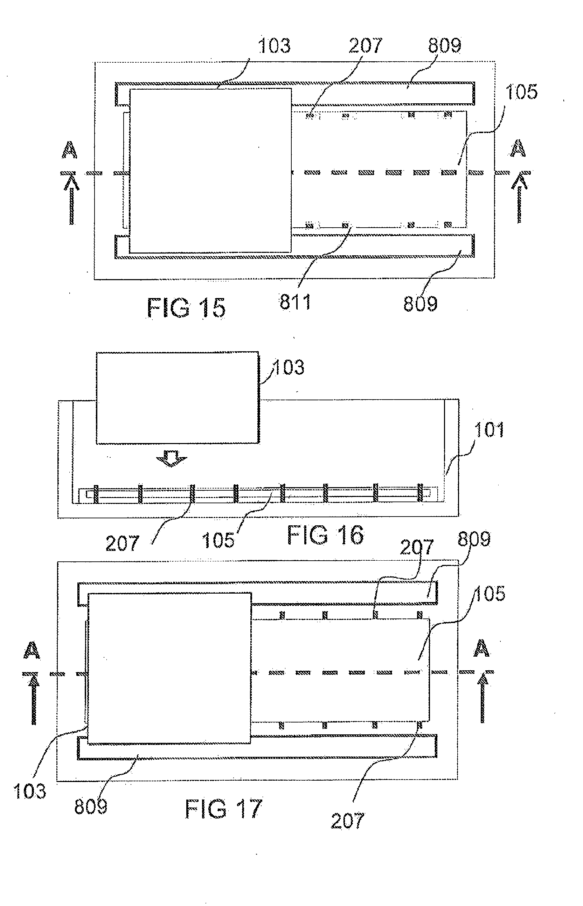

In den Figuren 14 und 15 ist ein weiteres Ausführungsbeispiel der erfindungsgemäßen Batterievorrichtung gezeigt. Gezeigt ist in Fig. 14 das weitere Ausführungsbeispiel der erfindungsgemäßen Batterievorrichtung in Schnittdarstellung, während das Batteriemodul 103 in Pfeilrichtung eingesetzt wird. Fig. 15 zeigt die Batterievorrichtung aus Fig. 14 in Draufsichtdarstellung, wenn das Batteriemodul 103 in der Batterievorrichtung platziert ist. Hierbei ist zu sehen, dass nun die Federn 207 mit den Spanneinheiten 913 nicht mehr durch Durchgangslöcher geführt sind, sondern der Kühler 105 an seinem Rand Ausnehmungen 811 aufweist. Durch diese Ausnehmungen 811 sind die Federn 207 gefügt, so dass die Spanneinheiten 913 über den Kühler 105 in Richtung des einzusetzenden Batteriemoduls 103 hinaus stehen. Auf diese Weise kann der erfindungsgemäße Lösungsansatz auch ohne die Verwendung der Durchgangslöcher gemäß den Figuren 8 bis 13 realisiert werden. In einem solchen Ausführungsbeispiel sollte eine geeignete Halterung der Federelemente 207 (beispielsweise in Form einer Gelenklagerung am Boden des Gehäuses 101) sichergestellt werden, damit die Federelemente 207 beim Einsetzen des Batteriemoduls 103 nicht aus den Ausnehmungen 811 hinaus rutschen.

Alternativ können auch die Federelemente 207 neben dem Kühler 105 geführt werden, wie dies in dem Ausführungsbeispiel der Erfindung gemäß den Figuren 16 bis 18 realisiert ist. In der Fig. 16 ist das weitere Ausführungsbeispiel der Erfindung als Schnittdarstellung wiedergegeben, wobei das Einsetzen des Batteriemoduls 103 in Pfeilrichtung erfolgt. Hierbei ist nun ersichtlich, dass die Federn 207 mit den Spanneinheiten über diejenigen Seite über den Kühler hinaus stehen, die nach einem Einsetzen des Batteriemoduls diesem Batteriemodul 103 zugewandt ist. In Fig. 17 ist eine Aufsichtdarstellung diese weiteren Ausführungsbeispiels mit eingesetztem Batteriemodul 103 dargestellt, wobei nun ferner sichtbar ist, dass die Federn 207 seitlich, d.h. zwischen dem Kühler 105 und einem der Anschläge 809 geführt sind. Auch in diesem Fall sollte eine entsprechende Halterung der Federelemente 207 gegen ein Herausfallen im nicht gespannten Zustand sichergestellt sind. In Fig. 17 ist weiterhin eine Schnittlinie A - A dargestellt, die die Schnittrichtung für die Darstellung aus Fig. 16 bildet.

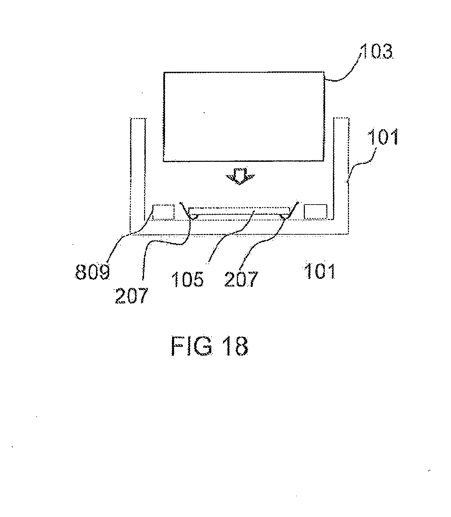

In der Fig. 18 ist eine Schnittdarstellung des weiteren Ausführungsbeispiels wiedergegeben, wobei nun ein Schnitt durch die Batterievorrichtung rechtwinklig zur Linie A - A aus Fig. 17 abgebildet ist. In Fig. 18 ist nun deutlich zu erkennen, dass die Federelemente 207 zwischen dem Kühler 105 und einem der Anschläge 809 geführt sind. Um ein sicheres Andrücken des Kühlers 105 an das Batteriemodul 103 zu erreichen, werden die Federn 207 jedoch nicht nur zwischen dem Kühler 105 und einem der Anschläge 809 geführt, sondern zwischen jedem der gegenüberliegenden Anschläge 809 und dem Kühler 105 ist eine bestimmte Anzahl von Federn platziert, so dass der Kühler 105 durch einen beidseitigen gleichmäßigen Anpressdruck an das Batteriemodul 103 gedrückt werden kann. Dies stellt einen guten und großflächigen thermischen Kontakt sicher und reduziert eine ungleichmäßige Belastung des Kühler 105.

## Patentansprüche

1. Kühlvorrichtung für ein Batteriemodul, mit folgenden Merkmalen:
einem Kühlelement (105), das sich von einer dem Batteriemodul (103) zugewandten ersten Seite des Kühlelements zu einer gegenüberliegenden zweiten Seite des Kühlelements erstreckt;
mindestens einem Federelement (207), das auf der zweiten Seite des Kühlelements angeordnet ist, um in einem angespannten Zustand eine Anpresskraft auf die zweite Seite des Kühlelements auszuüben;
**gekennzeichnet durch**
mindestens eine Spanneinrichtung (913), die mit dem Federelement gekoppelt ist, wobei sich ein Kontaktbereich der Spanneinrichtung über die erste Seite des Kühlelements hinaus erstreckt, wenn sich das Federelement in einem entspannten Zustand befindet.

2. Kühlvorrichtung gemäß Anspruch 1, bei der die Spanneinrichtung (913) ausgebildet ist, um eine Federspannung des Federelements (207) zu erhöhen, wenn der Kontaktbereich der Spanneinrichtung in Richtung der zweiten Seite bewegt wird.

3. Kühlvorrichtung gemäß einem der vorangegangenen Ansprüche, bei der der Kontaktbereich ausgebildet ist, um an das Batteriemodul (103) anzustoßen und von dem Batteriemodul zu der zweiten Seite hin gedrückt zu werden, wenn das Batteriemodul der ersten Seite des Kühlelementes (105) angenähert wird.

4. Kühlvorrichtung gemäß einem der vorangegangenen Ansprüche, bei der die Spanneinrichtung (913) aus einem Endbereich des Federelements (207) ausgeformt ist.

5. Kühlvorrichtung gemäß einem der vorangegangenen Ansprüche, bei der das Federelement (207) zumindest einen ersten Kontaktbereich zu der zweiten Seite des Kühlelements (105) und zumindest einen zweiten Kontaktbereich zu einem Batteriegehäuse (101) aufweist, in dem das Kühlelement angeordnet werden kann.

6. Kühlvorrichtung gemäß einem der vorangegangenen Ansprüche, bei der das Kühlelement (105) zumindest ein Durchgangsloch (811), insbesondere eine Mehrzahl von Durchgangslöchern (811) aufweist und wobei sich die Spanneinrichtung (913) durch zumindest ein Durchgangsloch (811) erstreckt oder die Kühlvorrichtung eine der Mehrzahl von Durchgangslöchern entsprechende Anzahl von Spanneinrichtungen (913) aufweist.

7. Kühlvorrichtung gemäß Anspruch 6, die eine der Mehrzahl von Durchgangslöchern (811) entsprechende Anzahl von Federelementen (207) aufweist.

8. Kühlvorrichtung gemäß Anspruch 6, bei der sich das mindestens eine Federelement (207) über einen Bereich des Kühlelementes (105) erstreckt, der mehrere oder alle der Mehrzahl von Durchgangslöchern (811) umfasst.

9. Batterievorrichtung, mit folgenden Merkmalen:
einem Batteriegehäuse (101); und
einer Kühlvorrichtung gemäß einem der vorangegangenen Ansprüche, die so in dem Batteriegehäuse angeordnet ist, das das mindestens eine Federelement (207) zwischen einer Innenwand des Batteriegehäuses und dem Kühlelement (105) angeordnet ist.

10. Batterievorrichtung gemäß Anspruch 9, mit mindestens einem Batteriemodul (103), das angrenzend an die erste Seite des Kühlelements (105) in dem Batteriegehäuse (101) angeordnet ist.

## Claims

1. A cooling device for a battery module having the following features:
a cooling element (105), which extends from a first side of the cooling element, said side facing the battery module (103), to an opposite second side of the cooling element;
at least one spring element (207), which is disposed on the second side of the cooling element, in order to exert a pressing force on the second side of the cooling element in a tensioned state; and
at least one tensioning device (913), which is coupled to the spring element, whereby a contact region of the tensioning device extends beyond the first side of the cooling element, when the spring element is in a relaxed state.

2. The cooling device according to claim 1, wherein the tensioning device (913) is designed, to increase a spring tension of the spring element (207), when the contact region of the tensioning device is moved in the direction of the second side.

3. The cooling device according to one of the preceding claims, wherein the contact region is designed to abut against the battery module (103) and to be pressed by the battery module toward the second side, when the battery module is made to approach the first side of the cooling element (105).

4. The cooling device according to one of the preceding claim, wherein the tensioning device (913) is formed from an end region of the spring element (207).

5. The cooling device according to one of the preceding claims, wherein the spring element (207) has at least one first contact region to the second side of the cooling element (105) and at least one second contact region to a battery housing (101), in which the cooling element can be disposed.

6. The cooling device according to one of the preceding claims, wherein the cooling element (105) has at least one through hole (811), particularly a plurality of through holes (811) and whereby the tensioning device (913) extends through at least one through hole (811) or the cooling device has a number of tensioning devices (913) corresponding to the plurality of through holes.

7. The cooling device according to claim 6, which has a number of spring elements (207) corresponding to the plurality of through holes (811).

8. The cooling device according to claim 6, wherein the at least one spring element (207) extends over an area of the cooling element (105), which comprises a number or all of the plurality of through holes (811).

9. A battery device having following features:
a battery housing (101); and a cooling device according to any of the preceding claims, which is disposed in the battery housing so that the at least one spring element (207) is disposed between an inner wall of the battery housing and the cooling element (105).

10. The battery device according to claim 9 having at least one battery module (103), which is disposed adjacent to the first side of the cooling element (105) in the battery housing (101).

## Revendications

1. Dispositif de refroidissement pour un module de batterie ayant les caractéristiques suivantes:
un élément de refroidissement (105) qui s'étend à partir d'un premier côté de l'élément de refroidissment tourné vers le module de batterie (103) jusqu'à un second côté opposé de l'élément de refroidissement; au moins un élément à ressort (207) qui est disposé sur le second côté :dë l'ément de refroidissement, pour exercer, dans un état de tension, une force de pression sur le second côté de l'élément de refroidissement, **caractérisé par** au moins un dispositif de tension (913) qui est couplé à l'élément à ressort, où une zone de contact du dispositif de tension s'étend au-delà du premier côté de l'élément de refroidissement, quand l'élément à ressort se trouve dans un état détendu.

2. Dispositif de refroidissement conformément à la revendication 1, dans lequel le dispositif de tension (913) est configuré pour augmenter une tension de ressort de l'élément à ressort (207), quand la zone de contact du dispositif de tension est déplacée en direction du second côté.

3. Dispositif de refroidissement conformément à l'une ou l'autre des revendications précédentes, dans lequel la zone de contact est configurée pour venir en appui sur le module de batterie (103) et pour être poussée en direction du second côté, depuis le module de batterie, quand le module de batterie est rapproché du premier côté de l'élément de refroidissement (105).

4. Dispositif de refroidissement conformément à l'une quelconque des revendications précédentes, dans lequel le dispositif de tension (913) est formé à partir d'une zone d'extrémité de l'élément à ressort (207).

5. Dispositif de refroidissement conformément à l'une quelconque des revendications précédentes, dans lequel l'élément à ressort (207) présente au moins un première zone de contact avec le second côté de l'élément de refroidissement (105) et au moins une seconde zone de contact avec un bac de batterie (101) dans lequel peut être disposé l'élément de refroidissement.

6. Dispositif de refroidissement conformément à l'une quelconque des revendications précédentes, dans lequel l'élément de refroidissement (105) présente au moins un trou de passage (811), en particulier une pluralité de trous de passage (811), et où le dispositif de tension (913) s'étend en passant par au moins un trou de passage (811), ou bien le dispositif de refroidissement présente une quantité de dispositifs de tension (913), qui correspond à la pluralité des trous de passage.

7. Dispositif de refroidissement conformément à la revendication 6, dispositif qui présente une quantité d'éléments à ressort (207), qui correspond à la pluralité des trous de passage (811).

8. Dispositif refroidissement conformément à la revendication 6, dans lequel l'élément à ressort (207) au moins au nombre de un s'étend sur une zone de l'élément de refroidissement (105) qui comprend plusieurs trous de passage (811) ou la totalité de la pluralité desdits trous.

9. Dispositif de batterie ayant les caractéristiques suivantes : un bac de batterie (101); et un dispositif de refroidissement conformément à l'une quelconque des revendications précédentes, dispositif qui est disposé dans le bac de batterie, de manière telle que l'élément à ressort (207) au moins au nombre de un soit disposé entre une paroi intérieure du bac de la batterie et l'élément de refroidissement (105).

10. Dispositif de batterie conformément à la revendication 9, comprenant au moins un module de batterie (103) qui est disposé en étant contigu au premier côté de l'élément de refroidissement (105) se trouvant dans le bac de batterie (101).
